# EUROPEAN PATENT APPLICATION

(11) **EP 1 440 948 A2**
(43) Date of publication of application: **28.07.2004**
(21) Application number: 04000741.1
(22) Date of filing: 15.01.2004
(51) Int. Cl.: C03B 37/012, C03B 23/207, C03B 37/027

(54) **Method of joining glass tubes end-to-end for making an optical fibre preform**

(30) Priority: 23.01.2003 US 349816
(71) Applicant: FITEL USA CORPORATION (a Delaware Corporation), Norcross, Georgia 30071 (US)
(72) Inventor: Fletcher III, Joseph Patrick, Marietta Georgia 30068 (US); Miller, Thomas John, Alpharetta Georgia 30022 (US); Guthrie, Donovan Alphanso, Lawrenceville Georgia 30043 (US)
(74) Representative: Schoppe, Fritz, Dipl.-Ing.

(57) **Abstract**

A method of assembling two optical fiber tube preforms end-to-end without negatively impacting the local glass chemistry at the joint. The ends of two tubes to be joined together are reverse-tapered by a grinding such that the outside portion of the tube walls extend further outward than the inner portions of the tube walls. Two tubes having such ends are briefly heated and brought together, and the reverse taper minimizes the size of the cross-sectional area of the tube portions to be joined. A minimal amount of heat that does not significantly impact the glass chemistry at the joint is applied to the outside of the tubes to effect a tack weld that joins the tubes. Once the tack weld is in place, additional heat in combination with a vacuum force can be applied to the tubes, which completes the sealing of the weld.

## Description

### FIELD OF THE INVENTION

The present invention relates generally to optical fiber fabrication, and more specifically, to methods for joining glass tubing and cylinders in optical fiber manufacturing.

### BACKGROUND OF THE INVENTION

Communications and data transmission systems that transmit information signals in the form of optical pulses over optical fiber are now commonplace, and optical fibers have become the physical transport medium of choice in long distance telephone and data communication networks due to their signal transmission capabilities, which greatly exceed those of mechanical conductors. Despite their advantages, however, difficulties in their manufacture must be overcome in order for lengthy, high-yield and error-free optical fiber to be produced in mass. One such manufacturing problem is economically producing lengthy optical fiber while maintaining appropriate optical fiber properties.

The manufacture of optical fiber utilizes a glass preform from which optical fiber is generated. The glass preform reproduces the desired index profile of the optical fiber in a thick glass rod. After a preform is created, it is loaded into a fiber drawing tower. The lower end of the preform is lowered into a furnace so that the end of the preform is melted until a molten glob falls down by gravity. As is falls, it forms a thread. The thread cools as it falls, and undergoes a series of processing steps (e.g., application of coating layers) to form the finished optical fiber. Therefore, it will be appreciated that the make-up and length of optical fiber generated by this process is dependent upon the characteristics of the preform from which the optical fiber is drawn.

The basic manufacturing steps of generating preforms are well known to those of skill in the art. Three basic forms for the production of preforms include: Internal Deposition, where material is grown inside a tube; Outside Deposition, where deposition is done on a mandrel removed in a later stage; and Axial Deposition, where deposition is done axially, directly on the glass preform. One of the most common and widely-used processes in optical fiber preform production is Modified Chemical Vapor Deposition (MCVD). By way of illustration, MCVD is a process for fabricating preforms wherein successive layers of cladding and core material are deposited on the inside surface of a substrate tube. Individual layers of deposited material are turned into glass (vitrified) by a torch that moves back and forth along the length of the tube. During a deposition process the torch assembly slowly traverses the length of the substrate tube while reactant gasses are fed into and exhausted from the tube. Following the deposition of core and cladding materials, the substrate tube is collapsed to form a solid core rod by heating it to a higher temperature than during deposition. The collapsed rod forms a preform. After the preform is generated, during an overcladding process material such as silica is added to the preform to bring its diameter to a desired value. This step may be performed by using an oxyhydrogen or plasma torch to overclad the preform, although other methods are also known to those of ordinary skill in the art. After the overcladding process is complete, the preform is ready to be drawn into optical fiber.

Although the generation of solid core rod preforms by the method described above are commonly utilized in optical fiber manufacturing, other techniques for economically producing optical fiber from large preforms are also used, such as rod-in-tube processing. Unlike the method described above, in rod-in-tube processing the core/cladding and overcladding layers are separately formed and subsequently combined. This process typically allows the formation of larger-diameter preforms. Generally, rod-in-tube processing comprises inserting, as a core/clad material, a glass rod having a higher refractive index into a cylindrical overcladding material, such as a quartz glass tube, having a lower refractive index than that of the core/clad material. The two materials are then heated and collapsed, resulting in a solid fused glass preform.

For optical fiber manufacturing applications, there are economic advantages for making large diameter (e.g. ≥ 90 mm) and long length (>1m) preforms using the rod-in-tube process, including the generation of lengthy optical fiber and less downtime for optical fiber production equipment. More specifically, it will be appreciated that as a preform is lowered into the furnace during drawing of the fiber, the preform is exhausted. The need to interrupt this fiber drawing process to put a new preform in place reduces efficiency of the process and reduces the consistency of the resultant fiber. Specifically, significant down-time is accumulated when putting new preforms in place and performing the initial drop of the preform into draw position. Moreover, significant waste is generated in re-establishing the draw from each new preform. Thus, techniques for fabricating more fiber from a single preform have been sought.

According to the present invention, two or more joined tubes may be used in rod-in-tube production of optical fiber preforms to generate long length preforms. It is preferable that joined tubes be processed through the fiber draw operation in the same manner as continuous tubes. Regrettably, the tube joining process can change local glass chemistry, and hence glass properties, around the joined region through volitalization of typical glass impurities such as chlorine and hydroxyl from both the joining surface and bulk regions of the glass. These localized compositional changes may alter the glass viscosity sufficiently to disrupt the fiber draw process. Viscosity changes near the joint can cause the fiber to break during the fiber draw process, negatively impacting yield and productivity.

U.S. Patent No. 6,305,195 describes a method for joining of two elongated bodies, such as silica preforms, end-to-end by use of an isothermal plasma torch technique. According to the patent, a long preform made in this manner allows drawing of optical fiber with less down-time and waste than current processes. Although the '195 patent describes the use of a plasma torch to join two elongated glass bodies, the patent does not describe or suggest a method of joining two or more glass tubes having a hollow central portion without altering local glass chemistry. U.S. Patent No. 6,178,779 similarly discloses a method of assembling two optical fiber preforms together end-to-end. The disclosed method includes the steps of placing two cylindrical preforms in alignment along a common longitudinal axis, rotating the preforms about the common longitudinal axis, heating the facing ends of the preforms by a heater, and moving the preforms towards each other parallel to the common axis to press them against each other so as to form intimate contact between the ends after cooling. According to the '779 patent, the heating is applied to the peripheries and then the cores of the preforms. Like the '195 patent, the method is only described with respect to solid preforms (i.e., those having cores). The '195 patent does not disclose a method of combining glass tubes without negatively impacting the glass chemistry of the tubes near the joint.

Therefore, what is needed is a method for joining glass tubes to generate a lengthy preform without altering the glass chemistry near the joint and negatively impacting the fiber draw process.

### BRIEF SUMMARY OF THE INVENTION

The present invention overcomes the disadvantages of the prior art by providing a method of assembling two or more tubes, for use in creating optical fiber preforms, end-to-end without negatively impacting the local glass chemistry at the joint which would negatively impact production of fiber from the resulting preform. According to the present invention, the ends of two tubes to be joined together are first reverse-tapered by a grinding, cutting or equivalent process such that the outside portion of the tube walls extend further outward than the inner portions of the tube walls. When two tubes having such ends are brought together, the reverse taper minimizes the size of the cross-sectional area exposed to heat sources of the tube portions to be joined. This allows a minimal amount of heat to be applied to the end of the tubes to effect a tack weld that joins the tubes. Because the taper is also used to collapse the two surfaces the taper eliminates air bubbles at the joint. After the tack weld is in place, the combined tube can be further heated around the tack weld to eliminate a gap formed by the reverse-tapers and effect a joining of the tubes. Because a minimal amount of heat is required the heat does not significantly impact the glass chemistry at the joint, thus allowing the lengthened tube to maintain appropriate compositional properties to ensure that the lengthy preform does not negatively impact the drawing process. Additionally, once the tack weld is in place, additional heat in combination with a vacuum force can be applied to the tubes, which completes the sealing of the weld.

According to one embodiment of the present invention, there is disclosed a method of fabricating an article. The method includes the steps of providing a first body having a hollow portion and at least one first end including a first end face, wherein the first body includes a continuous outer surface and a continuous inner surface defining the hollow portion, and wherein the hollow portion spans the length of the first body, and the step of providing a second body having a hollow portion and at least one first end including a first end face, wherein the second body includes a continuous outer surface, and a continuous inner surface defining the hollow portion, and wherein the hollow portion spans the length of the second body. The method further includes the steps of shaping the first end face of the first body and the first end face of the second body such that the outer surfaces of the bodies protrude farther than the respective inner surfaces of the bodies, orienting the first and second bodies such that their respective shaped first end faces are opposite each other, heating a portion of the shaped first end faces until the viscosity of a portion of each of the shaped first end faces is lowered, and moving at least one of the two bodies toward the other body until the lowered viscosity portions are joined.

According to one aspect of the invention, the step of shaping the first end faces of the first and second bodies includes shaping the respective first end faces such that the shape includes a center end face portion displaced approximately 5 degrees from an exterior edge of the first end face. According to another aspect of the invention, the step of providing a first body and a second body includes providing a first refractory dielectric body and a second refractory dielectric body. According to yet another aspect of the invention, the method further includes the step of rotating the first and second bodies around a common longitudinal axis of the bodies during the heating and moving steps.

Furthermore, the step of shaping the first end faces of the first and second bodies can include shaping the respective first end faces such that the outer surfaces of the bodies protrude farther than the respective inner surfaces of the bodies so as to form respective concave-shaped first end faces. The method can also include the step of applying a vacuum to the hollow portion of the joined bodies during the step of moving at least one of the two bodies toward the other body until the lowered-viscosity remaining portions are joined.

According to another aspect of the invention, the method can include the step of decreasing the diameter of the joined bodies at the location at which the first and second bodies are joined. The method can further include the step of applying additional heat to the first ends of the first and second bodies until the viscosity of the remaining portion of the end faces is lowered. Furthermore, the method can further include the step of moving at least one of the two bodies toward the other body until the lowered-viscosity remaining portions are joined.

According to another embodiment of the invention, there is disclosed a method of joining two hollow bodies. The method includes shaping respective first ends of a first hollow body and a second hollow body such that the ends each include a concave recess, each concave recess having a central recessed portion and a raised exterior portion, heating at least a portion of the respective first ends until the viscosity of the ends is lowered, and moving the first hollow body and the second hollow body toward each other until the outside edges of their respective concave recesses are joined.

According to one aspect of the invention, the steps of shaping the first ends of the first and second hollow bodies include shaping the respective first end faces such that the concave recesses include a central recessed portion and a raised exterior portion, where the central recessed portions of the concave recesses are displaced approximately 5 degrees from the raised exterior portions. According to another aspect of the invention, steps of shaping include the steps of shaping a first refractory dielectric hollow body and a second refractory dielectric hollow body. According to yet another aspect of the invention, the method further includes the step of rotating the first and second hollow bodies around a common longitudinal axis of the hollow bodies during the heating and moving steps.

According to a further aspect of the invention, the step of heating includes heating the respective first ends using a plasma torch. The step of heating can also include heating the respective first ends using a furnace. The method can also include the additional step of applying a vacuum to the hollow portions of the respective hollow bodies during the step of moving at least one of the two hollow bodies toward the other hollow body.

According to another aspect of the invention, the method further includes the subsequent step of decreasing the diameter of the fully joined hollow bodies at the location at which the first and second hollow bodies are joined. Furthermore, the method may include the step of applying additional heat to the first ends of the first and second hollow bodies until the viscosity of the ends are lowered, and the step of moving at least one of the two hollow bodies toward the other hollow body until the ends of the first and second bodies are fully joined.

### BRIEF DESCRIPTION OF THE SEVERAL VIEWS OF THE DRAWING(S)

Having thus described the invention in general terms, reference will now be made to the accompanying drawings, which are not necessarily drawn to scale, and wherein:
FIG. 1 illustrates the positioning of a core/clad rod within an overclad tube to form an assembly used in rod-in-tube processing, according to the prior art.
FIG. 2 shows a bisected view of a single tube end, according to one embodiment of the present invention.
FIG. 3 shows a bisected view of two tubes having respective ends to which heat is applied by a heat source, according to one embodiment of the present invention.
FIG. 4 shows a bisected view of two tack-welded tubes to which heat is applied by a heat source, according to one embodiment of the present invention.
FIG. 5 shows a block diagram flow chart illustrating a method of joining glass tubes, according to one embodiment of the present invention.
FIGS. 6A-6C show perspective views of a joined tube having geometry modifications at the tube joints, according to one embodiment of the present invention.

### DETAILED DESCRIPTION OF THE INVENTION

The present inventions now will be described more fully hereinafter with reference to the accompanying drawings, in which some, but not all embodiments of the invention are shown. Indeed, these inventions may be embodied in many different forms and should not be construed as limited to the embodiments set forth herein; rather, these embodiments are provided so that this disclosure will satisfy applicable legal requirements. Like numbers refer to like elements throughout.

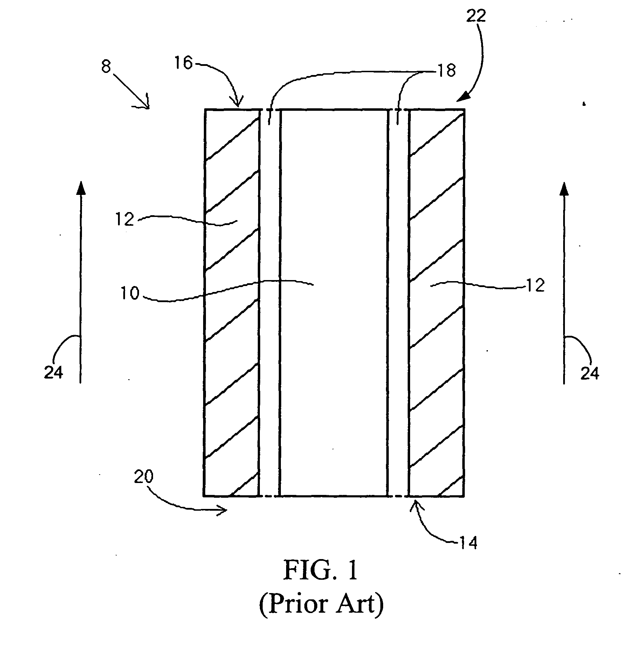

FIG. 1 illustrates an assembly **8** used in rod-and-tube processing. It will be appreciated by those of ordinary skill in the art that assembly 8 and rod-and-tube processing described throughout the present application is likewise applicable to rod-in-cylinder processing. Therefore, although the remainder of the present application refers to tubing used in rod-in-tube processing, the application to cylinders and rod-in-cylinder processing is implied and hence the terms are used interchangeably herein. Referring again to FIG. 1, the assembly **8** includes a core/clad rod **10** and overclad tube **12** as arranged prior to the collapsing of the tube **12** onto the rod **10**. As shown in FIG. 1, the rod **10** is positioned within the tube **12,** which substantially surrounds the rod **10.** The tube **12** includes a lower end **14** and an upper end **16.** The rod **10** is positioned in the tube **12** such that there is an annular space **18** (shown enlarged for the sake of clarity) between the rod **10** and tube **12.** During rod-in-tube processing, as is well known in the art, the annular space **18** is eliminated during a fusing process. The fusing process comprises initially heating the assembly **8** with flames or another suitable heat source from the end **20** of the assembly **8** and thereafter along the length of the tube **12** in a direction represented by arrows **24**. The heating is carried out while the assembly **8** is rotated, as effected using a lathe (not illustrated) or similar device. Typically suction is applied to the annular space **18** from the top end **22** of the assembly **8** via a device which seals the annular space **18** and provides a suitable connection to a suction device. In this way the tube **12** is collapsed onto the rod **10** to form a solid cross-section preform.

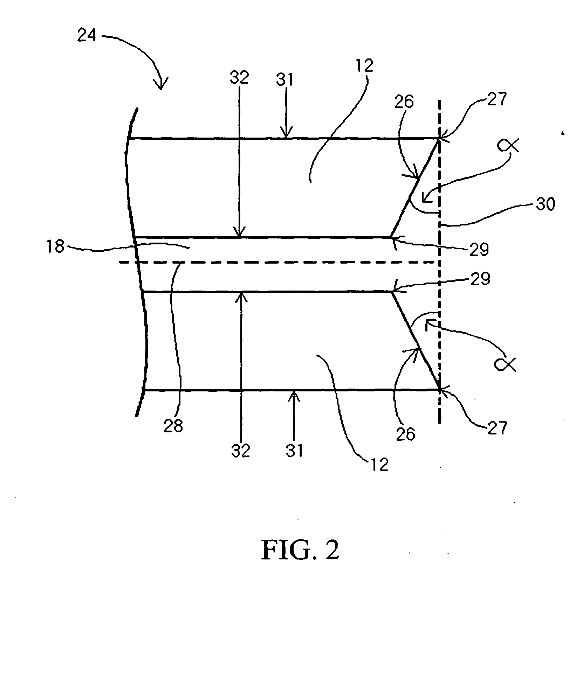

FIG. 2 shows a bisected view of the end **24** of an overclad tube **12** having an empty annular space **18** into which a core/clad rod has yet to be inserted. The tube **12** illustrated in the figure has been prepared for joining to another like tube. More particularly, the end **26** of the tube **12,** as defined by an edge-to-edge line passing across the end face **26** of the tube **12,** has been reverse-tapered by grinding or cutting such that it is not perpendicular with the long axis of the tube, which is defined by the center axis **28** passing through the length of the tube **12.** More specifically, as shown in FIG. 2, the tube end **26** is oriented at an angle α from the plane **30** perpendicular to the center axis **28** such that the outside **31** of the tube **12,** at its furthest end **27,** protrudes farther than the inside **32** of the tube at its furthest end **29.** Preferably this reverse-taper is consistent around the circumference of the tube **12,** with an angle α equal to approximately five (5) degrees. As will be explained in detail below, the reverse-taper of the tube **12** promotes a uniform, defect-free joint when joined with a tube having a similarly reverse-tapered end.

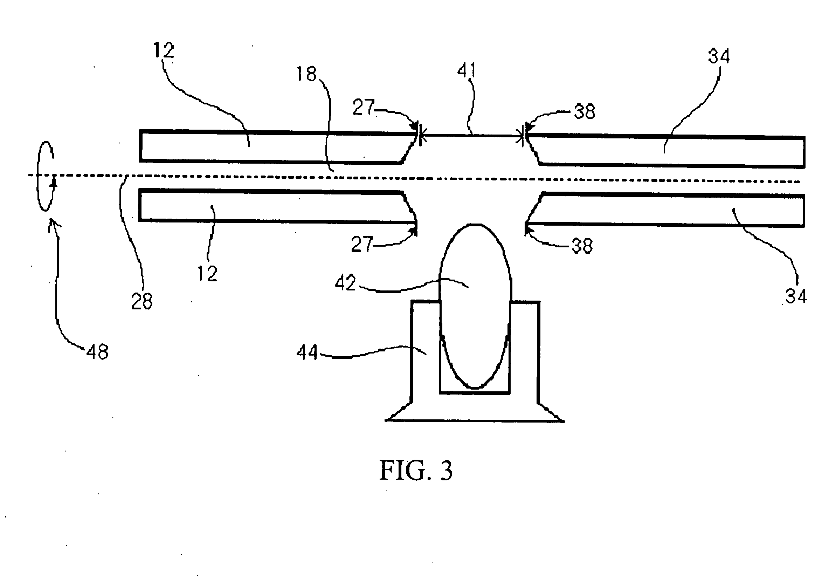

FIG. 3 shows a bisected view of two tubes **12, 34** having respective ends to which heat is applied by a heat source, according to one embodiment of the present invention. The facing ends of the tubes **12, 34** are each prepared according to the method described with respect to FIG. 2. Therefore, both tube ends are reverse-tapered. The tubes **12, 34** are oriented such that the end faces are positioned directly opposite each other. The distance **41** between the end faces (shown enlarged in FIG. 3 for the sake of clarity) initially preferably ranges from about 1 mm to about 3 mm. To effect this orientation, the tubes **12, 34** are mounted on a glassmaking lathe (not illustrated) which is operable to rotate **48** the tubes **12, 34** around a common center longitudinal axis **28** passing through the length of the tubes **12, 34.** The lathe is also operable to increase or decrease distance **41** between the ends of the tubes **12, 34**. Such a lathe is described in U.S. Patent No. 6,178,779, the entire contents of which are incorporated herein by reference. Because the structure and operation of lathes are well known to those of ordinary skill in the art, they are not described further herein.

Referring again to FIG. 3, the tubes **12, 34** are located adjacent to an isothermal plasma torch **44** which generates a plasma fireball **42**. A variety of isothermal plasmas may be used in the present invention. Examples include oxygen and oxygen-containing plasma, e.g., oxygen/argon. The plasma is typically hydrogen-free, such that OH impurities in the resulting article are substantially avoided.

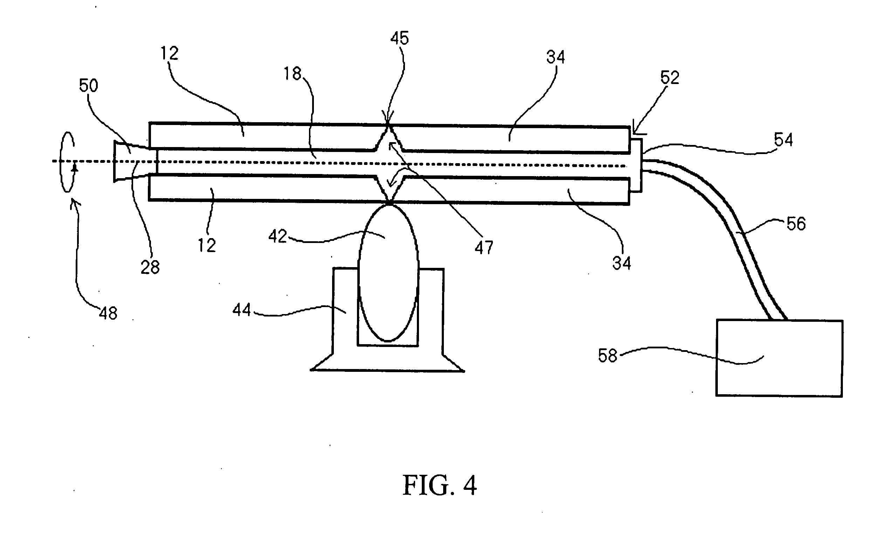

As illustrated in FIG. 3, the plasma fireball **42** occupies the position between the ends of the tubes **12, 34.** The plasma fireball **42** heats and reduces the viscosity of the tube ends as the two tubes **12, 34** are brought together by the lathe. The viscosity of the tube ends should be soft enough so that they may be fused together. For instance, to fuse high-silica glass the glass temperature should be greater than 1900 degrees centigrade. Therefore, the distance **41** between the end faces decreases as the ends are heated by the torch **44.** Because the outside ends **27, 38** of the tubes protrude further towards the plasma fireball **42** than the remaining surface of the tube ends, the outside ends **27, 38** are the first portions of the tube ends to liquefy. The ends are rapidly moved together until the ends touch. According to one aspect of the invention, movement of the tubes **12, 34** toward each other is ceased once the outside ends **27, 38** come into contact. However, depending on the heat of the glass and the angle of the taper cut, the tubes may be further pushed together after the initial contact of the ends **27, 38.** The plasma fireball **42** does not come into direct contact with a substantial surface portion of the ends of the tubes **12, 34.** This minimizes the opportunity for compositional changes to occur in the glass chemistry. The contact of the heated, liquefied glass of the outside ends **27, 28** results in a tack weld joint **45,** illustrated in FIG. 4.

It will be appreciated that the reverse taper minimizes the size of the cross-sectional area of the tube portions that are joined. This allows a minimal amount of heat to be applied to the outside of the tubes to cause the ends **27, 38** to liquefy. Therefore, the plasma fireball **42** is applied to the tube ends for very little time, typically 30 seconds or less. Because a minimum amount of heat is applied for a relatively short period of time, the generation of the tack weld does not impact the glass chemistry of the combined tubes. Additionally, the existence of the tack weld prevents direct interaction between the plasma fireball **42** and a substantial amount of surface comprising the ends of the tubes **12, 34.** Moreover, due to the small cross-sectional area of the outside ends **27, 38** which come into contact, very little excess material is generated at the tack weld joint **45.**

Because the lathe rotates **48** the tubes as the tack weld is formed, the tack weld exists around the entire circumference of the combined tube (i.e., tubes **12, 34** after the tack-weld is in effected). However, because the tubes **12, 34** are tacked together only along their outside surface, the tubes **12, 34** are not yet fully joined. FIG. 4 shows a bisected view of the two tubes **12, 34** of FIG. 3 coupled together at the tack weld joint **45.** As shown in FIG. 4, after the tack weld joint **45** is in place the tubes **12, 34** are yet to be joined along the entire thickness of the joined tube wall due to the gap **47** that results from the reverse tapers. To close this gap **47** and complete the joining of the two tubes **12, 34,** additional heat is supplied by the plasma torch **44** along the outside of the combined tube. For wall thicknesses in the range of 20-30 mm, and for outside diameters of 60-100 mm, the plasma torch should be applied for approximately 5-12 minutes. The additional heat will cause the glass around the gap **47** to become viscous. As the heat is applied and the lathe rotates **48,** the gap **47** will disappear. Optionally, to ensure that the gap **47** is filled with a sufficient amount of glass to maintain a consistent radius of the annular space, the tubes **12, 34** may be moved toward each other. However, this may result in excess material being generated at the resulting joint due to pressing of liquefied material between the tubes **12, 34.** Nevertheless, the plasma torch **44** may be used to remove any excess material generated by this process, as is well known in the art.

Also illustrated in FIG. 4 is a vacuum **58** connected to the annular space **18** by a hose **56** and cap **54.** The cap **54** provides the hose **56** a suitable connection to the vacuum **58** and is operable to seal a first end **52** of the combined tube. A stopper, cap or like device **50** is likewise inserted into the opposite end of the combined tube, thereby sealing the entire annular space **18.** During the heating of the combined tube to eliminate the gap **47**, as described above, a vacuum may be applied to force air out of the annular space. This vacuum will assist in moving the ends of the tubes **12, 34** together and will thus aid in the joining of the tubes. The vacuum will also aid in the dispersion into the gap **47** of heated glass surrounding the gap **47.** It will be appreciated that the vacuum is optional, and may be particularly beneficial in assisting the joining process for thick walled tubing.

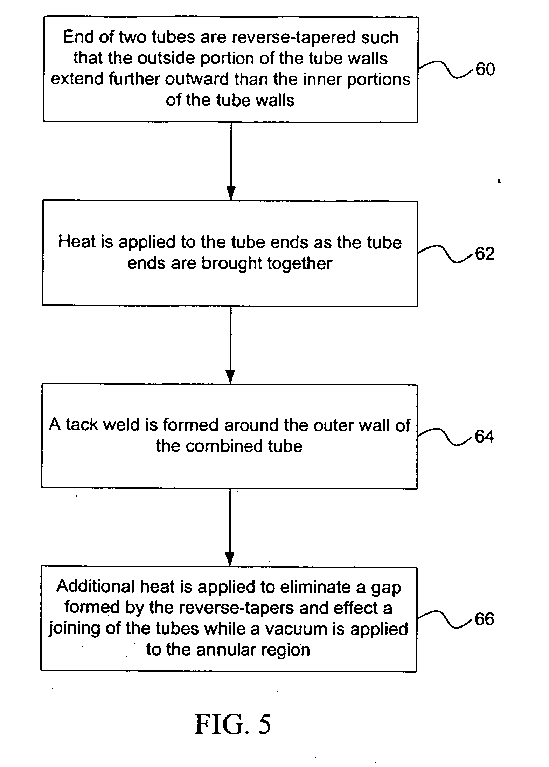

FIG. 5 shows in block diagram form a method of joining glass tubes, according to one embodiment of the present invention. As shown in block **60**, the ends of two tubes are reverse-tapered such that the outside portion of the tube walls extend further outward than the inner portions of the tube walls, as was described in detail with respect to FIG. 2. Next, heat is applied to the two tube ends as the tubes are brought together by a lathe (block **62**), as was described in detail with respect to FIG. 3. As the two ends are brought together, a tack weld is formed around the outer wall of the combined tube (block **64**), as shown in FIG. 4. Finally, as is also described with respect to FIG. 4, additional heat is then applied to eliminate the gap formed by the reverse tapers and to effect a joining of the tubes (block **66**). Additionally, a vacuum may be applied to the annular region to aid in the creation of the joint (block **66**).

Because a minimal amount of heat is required using the process described above the heat does not significantly impact the glass chemistry at the joint, thus allowing the lengthened tube to maintain appropriate compositional properties to ensure that the lengthy preform does not negatively impact the drawing process. It will also be appreciated that more than two tubes can be joined using the above process. For instance, a series of tubes each having tapered ends may be created end-to-end to increase fiber optic yield during the drawing process.

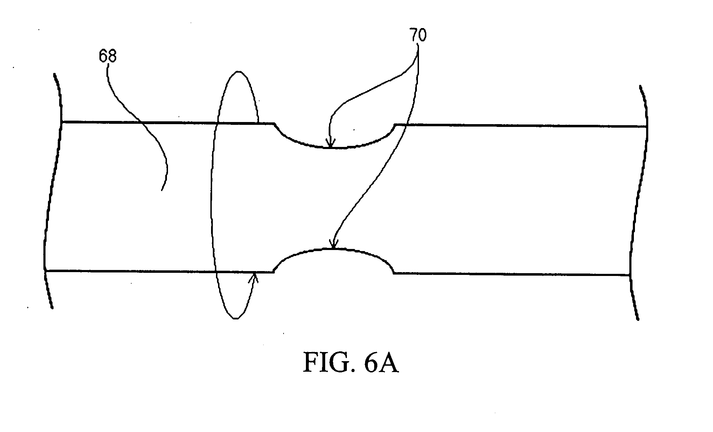

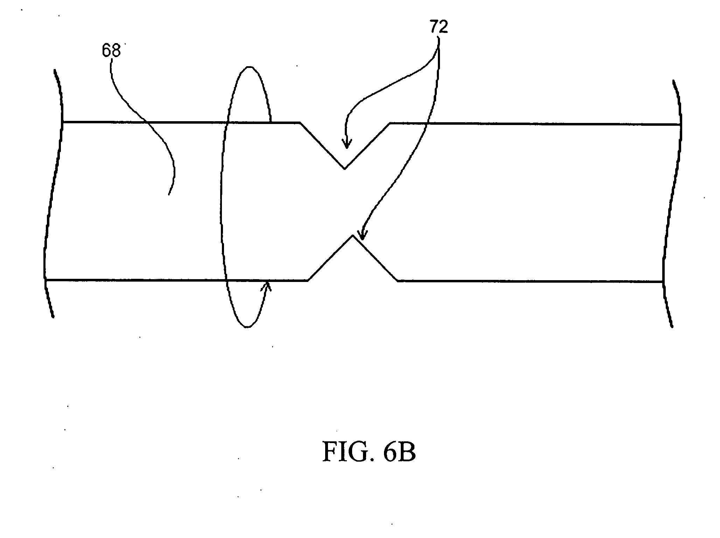

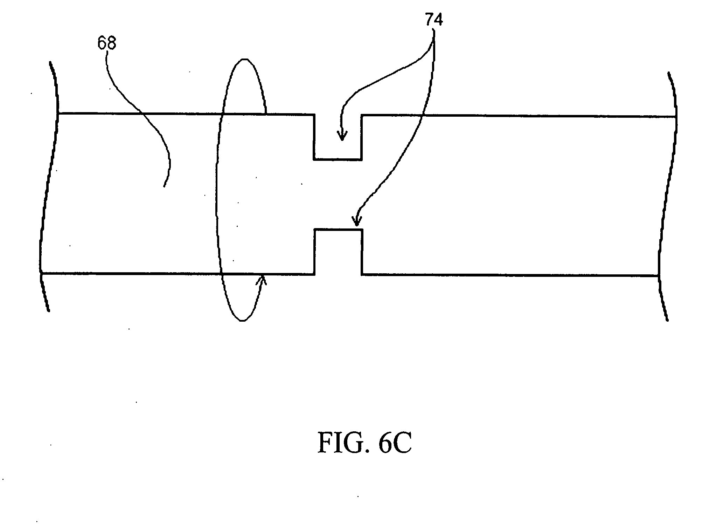

FIG. 6A shows a perspective view of a joined tube **68**, now a preform, having a geometry modification **70** at the tube joint, according to one embodiment of the present invention. The geometry modification is optional and can be made to ensure appropriate flow characteristics during drawing of the fiber there from. As illustrated, to ensure that appropriate flow characteristics are encountered during drawing of the fiber, glass at the joint may be cut or shaved away around the entire circumference of the joined tube **68**. According to one embodiment of the invention, the cut may be made such that an arc or bow is made along the entire circumference of the joined tube, where the arc has a width of 2 cm and a depth of 2 mm. FIGS. 6B and 6C show alternative embodiments of geometry modifications, such as a v-shaped **72** and notched **74** modifications. Each of these geometry modifications **70, 72, 74** will minimize any resistance of flow that may result from the joint and help to ensure appropriate flow characteristics.

It will be appreciated that the optional geometry modification illustrated in FIGS. 6A-6C may also be achieved prior to the joining of the tubes. This could be effected, for instance, by cutting or shaving the outside of the tube ends, so that a point or protrusion is created at the tube end between the inside surface of the tube and the outside surface of the tube. This would allow a geometrical modification to exist even after the tubes are joined.

Many modifications and other embodiments of the inventions set forth herein will come to mind to one skilled in the art to which these inventions pertain having the benefit of the teachings presented in the foregoing descriptions and the associated drawings. Thus, it will be appreciated by those of ordinary skill in the art that the present invention may be embodied in many forms and should not be limited to the embodiments described above. As an example, although a plasma torch is described above, a number of alternative heat sources, such as a furnace, may be used in one or more steps described above as will be appreciated by those of skill in the art. As a further example, although the embodiments above describe the use of a circular tube, the method described herein contemplates hollow members having different cross-sectional shapes. Therefore, it is to be understood that the inventions are not to be limited to the specific embodiments disclosed and that modifications and other embodiments are intended to be included within the scope of the appended claims. Although specific terms are employed herein, they are used in a generic and descriptive sense only and not for purposes of limitation.

## Claims

1. A method of fabricating an article, comprising:
providing a first body having a hollow portion and at least one first end comprising a first end face, wherein said first body comprises a continuous outer surface and a continuous inner surface defining the hollow portion, and wherein said hollow portion spans the length of the first body;
providing a second body having a hollow portion and at least one first end comprising a first end face, wherein said second body comprises a continuous outer surface, and a continuous inner surface defining the hollow portion, and wherein said hollow portion spans the length of the second body;
shaping the first end face of said first body and the first end face of said second body such that the outer surfaces of said bodies protrude farther than the respective inner surfaces of said bodies;
orienting the first and second bodies such that their respective shaped first end faces are opposite each other;
heating a portion of the shaped first end faces until the viscosity of a portion of each of said shaped first end faces is lowered; and
moving at least one of the two bodies toward the other body until said lowered viscosity portions are joined.

2. The method of claim 1, wherein the step of shaping the first end faces of said first and second bodies comprises shaping said respective first end faces such that the shape comprises a center end face portion displaced approximately 5 degrees from an exterior edge of said first end face.

3. The method of claim 1, wherein the step of providing a first body and a second body comprises providing a first refractory dielectric body and a second refractory dielectric body.

4. The method of claim 1, further comprising the step of rotating the first and second bodies around a common longitudinal axis of the bodies during the heating and moving steps.

5. The method of claim 1, wherein the step of shaping the first end faces of said first and second bodies comprises shaping the respective first end faces such that the outer surfaces of said bodies protrude farther than the respective inner surfaces of said bodies so as to form respective concave-shaped first end faces.

6. The method of claim 1, further comprising the step of applying a vacuum to the hollow portion of the joined bodies during the step of moving at least one of the two bodies toward the other body until the lowered-viscosity remaining portions are joined.

7. The method of claim 1, further comprising the step of decreasing the diameter of the joined bodies at the location at which the first and second bodies are joined.

8. The method of claim 1, wherein the step of heating comprises heating said respective first ends using a plasma torch.

9. The method of claim 1, further comprising the step of applying additional heat to the first ends of said first and second bodies until the viscosity of the remaining portion of the end faces is lowered.

10. The method of claim 9, further comprising the step of moving at least one of the two bodies toward the other body until the lowered-viscosity remaining portions are joined.

11. A method of joining two hollow bodies, comprising:
shaping respective first ends of a first hollow body and a second hollow body such that the ends each comprise a concave recess, each concave recess having a central recessed portion and a raised exterior portion;
heating at least a portion of said respective first ends until the viscosity of the ends is lowered; and
moving the first hollow body and the second hollow body toward each other until the outside edges of their respective concave recesses are joined.

12. The method of claim 11, wherein the steps of shaping the first ends of said first and second hollow bodies comprise shaping said respective first end faces such that the concave recesses include a central recessed portion and a raised exterior portion, where the central recessed portions of the concave recesses are displaced approximately 5 degrees from said raised exterior portions.

13. The method of claim 11, wherein the steps of shaping comprise the steps of shaping a first refractory dielectric hollow body and a second refractory dielectric hollow body.

14. The method of claim 11, further comprising the step of rotating the first and second hollow bodies around a common longitudinal axis of the hollow bodies during the heating and moving steps.

15. The method of claim 11, wherein the step of heating comprises heating said respective first ends using a plasma torch.

16. The method of claim 11, wherein the step of heating comprises heating said respective first ends using a furnace.

17. The method of claim 11, further comprising the step of applying a vacuum to the hollow portions of the respective hollow bodies during the step of moving at least one of the two hollow bodies toward the other hollow body.

18. The method of claim 11, further comprising the subsequent step of decreasing the diameter of the fully joined hollow bodies at the location at which the first and second hollow bodies are joined.

19. The method of claim 11, further comprising the step of applying additional heat to the first ends of the first and second hollow bodies until the viscosity of the ends are lowered.

20. The method of claim 19, further comprising the step of moving at least one of the two hollow bodies toward the other hollow body until the ends of the first and second bodies are fully joined.
